# EUROPEAN PATENT APPLICATION

(11) **EP 4 570 398 A1**
(43) Date of publication of application: **18.06.2025**
(21) Application number: 24184018.0
(22) Date of filing: 24.06.2024
(51) Int. Cl.: B21D 51/16, B21C 51/00, B21D 51/26, B21D 22/20, B21D 43/04, G01S 17/04, G01V 8/12, G01S 7/497

(54) **APPARATUS FOR MANUFACTURING BATTERY CAN, METHOD OF MANUFACTURING BATTERY CAN, AND SECONDARY BATTERY INCLUDING BATTERY CAN**

(30) Priority: 14.12.2023 KR 20230182103
(71) Applicant: SAMSUNG SDI CO., LTD., Giheung-gu Yongin-si, Gyeonggi-do 17084 (KR)
(72) Inventor: Jang, Young Jin, 16678 Suwon-si, Gyeonggi-do (KR); Choi, Jung Hun, 16678 Suwon-si, Gyeonggi-do (KR)
(74) Representative: Gulde & Partner

(57) **Abstract**

The present disclosure relates to an apparatus for manufacturing a battery can, a method of manufacturing a battery can, and a secondary battery including a battery can. The apparatus for manufacturing a battery can includes a press mold configured to press a metal bar made of a metal material and form the metal bar into a battery can, and a sensor assembly configured to count the metal bar. The sensor assembly includes a sensor including a sensing surface to detect the metal bar before the metal bar is placed on the press mold, a support configured to support the sensor without blocking the sensing surface, an air nozzle coupled to the support and configured to blow air outside the support into the support such that a positive pressure is generated inside the support, and an air supplier connected to the air nozzle to blow the air into the support.

## Description

### BACKGROUND

### 1. Field of the Invention

Aspects of embodiments of the present disclosure to an apparatus for manufacturing a battery can, a method of manufacturing a battery can, and a secondary battery including a battery can.

### 2. Description of the Related Art

In general, as the demand for portable electronic products such as notebook computers, video cameras, and portable phones is rapidly increasing, and the commercialization of robots, electric vehicles, and the like begins in earnest, research on high-performance repeatedly chargeable and dischargeable secondary batteries is being actively conducted.

A secondary battery may include an electrode assembly and a battery can in which an electrolyte is accommodated. A battery can may be formed by pressing a bar made of a metal material. An apparatus for manufacturing a battery can that automatically manufactures a battery can includes a sensor that counts bars made of a metal material input to a press mold.

However, a sensor that counts battery cans may malfunction due to pollutants such as lubricant dust, and as a result, an apparatus for manufacturing a battery may often stop operation, which can reduce productivity.

The aforementioned information disclosed in this background section is provided for enhancement of understanding of the background technology of the present disclosure, and therefore may contain information that does not constitute the related art.

### SUMMARY OF THE INVENTION

According to an aspect of embodiments of the present disclosure an apparatus for manufacturing a battery can, or a battery case, which includes a sensor assembly that prevents (prevents or substantially prevents) sensor malfunctions and errors due to pollutants, a method of manufacturing a battery can, and a secondary battery including a battery can, are provided.

These and other aspects and features of the present disclosure will be described in or will be apparent from the following description of some embodiments of the present disclosure.

According to an aspect of the present invention, there is provided an apparatus for manufacturing a battery can, the apparatus including a press mold configured to press a metal bar made of a metal material and form the metal bar into a battery can, and a sensor assembly configured to count, or detect, the metal bar, wherein the sensor assembly includes a sensor including a sensing surface to detect the metal bar before the metal bar is placed on the press mold, a support configured to support the sensor without blocking the sensing surface, an air nozzle coupled to the support and configured to blow air outside the support into the support such that a positive pressure is generated inside the support, and an air supplier connected to the air nozzle to blow the air into the support.

The air flowing into the support may be moved in a direction opposite to a direction toward the sensor and may be discharged to an outside of the support.

The sensor assembly may further include a guide arranged inside the support and configured to guide the air to flow inside the support.

The guide may include a discharge guide portion that obliquely expands such that a cross-sectional area of a flow path increases away from the sensing surface.

The guide may further include an inflow guide portion connected to the discharge guide portion to allow air to flow such that the air flowing into the support from the air nozzle is guided to the discharge guide portion.

The inflow guide portion may include one end portion, e.g., a first end portion, that is open toward the air nozzle, the other end portion, e.g., a second end portion, connected to the discharge guide portion, and a minimum flow path portion in which a cross-sectional area of a flow path is narrowest between the one end portion (e.g., first end portion) and the other end portion (e.g., second end portion).

The sensor assembly may further include a guide holder coupled to the support such that the guide is not separated from the support while accommodated inside the support.

The guide holder may include an air discharge portion aligned with the discharge guide portion and connected to allow air to flow and in which a cross-sectional area of a flow path decreases away from the sensing surface.

The metal bar may be spaced apart from the sensor with the guide interposed therebetween, and the sensor may be configured to detect a presence of the metal bar when the metal bar is positioned to face the sensing surface with the guide interposed therebetween.

The sensor may be a photosensor, and the air flowing into the support may be moved parallel to an optical axis of the sensing surface and may be discharged to the outside of the support.

The support may include a light-transmitting window aligned with the sensing surface such that light is incident on the sensing surface.

The sensor may be in contact with and supported on an outer surface of the support, and the support may include a sensor seating surface, on which a peripheral portion of the sensing surface is seated, on the outer surface.

The sensor assembly may further include a sensor fixing bracket configured to fix the sensor to the support such that the peripheral portion of the sensing surface is in contact, (e.g., close contact) with the sensor seating surface.

The sensor fixing bracket may include a sensor contact around (e.g., surrounding) the sensor and in contact (e.g., close contact) with the sensor, and a fastener connection portion connected to an end of the sensor contact portion and coupled to the support by a fastener, and when the fastener connection portion is coupled to the support by the fastener, the sensor contact portion may press the sensor toward the sensor seating surface.

According to one or more embodiments of the present invention, a method of manufacturing a battery can includes a metal bar supplying step of supplying a metal bar, a metal bar counting step of counting, or detecting, the metal bar using a sensor assembly, and a metal bar pressing step of pressing the metal bar using a press mold and forming the metal bar into a battery can, wherein the sensor assembly includes a sensor including a sensing surface to detect the metal bar before the metal bar pressing step, a support configured to support the sensor without blocking the sensing surface, an air nozzle coupled to the support and configured to blow air outside the support into the support such that a positive pressure is generated inside the support, and an air supplier connected to the air nozzle to blow the air into the support.

According to one or more embodiments of the present invention, a secondary battery includes a battery can including a battery can manufactured through the method according to an embodiment, an electrode assembly accommodated in the battery can, and a cap assembly configured to cover an opening of the battery can and coupled to the battery can.

According to embodiments of the present disclosure, a positive pressure is generated in an internal space of a support such that a sensing surface of a sensor is not contaminated with pollutants such as lubricant dust. Therefore, malfunctions and errors of the sensor may be prevented.

According to embodiments of the present disclosure, malfunctions and errors of a sensor assembly may be prevented, and thus an operation stop of an apparatus for manufacturing a battery can due to errors of a sensor assembly may be prevented. Accordingly, it is possible to improve the production of the battery can and a secondary battery including the battery can. Productivity of a production method and/or a production plant for battery cans can be improved, as the reliability of the sensor for counting the metal bar is improved.

However, the aspects and effects obtainable through the present disclosure are not limited to the above aspects and effects, and other technical aspects and effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a block diagram illustrating a configuration of an apparatus for manufacturing a battery can according to an embodiment of the present disclosure;
FIG. 2 is a top perspective view illustrating a sensor assembly of FIG. 1;
FIG. 3 is a bottom perspective view illustrating the sensor assembly of FIG. 1;
FIG. 4 is a cross-sectional view of the sensor assembly along the line IV-IV of FIG. 2;
FIG. 5 is a cross-sectional view of the sensor assembly along the line V-V of FIG. 2;
FIG. 6 is a top exploded perspective view illustrating the sensor assembly of FIG. 2;
FIG. 7 is a bottom exploded perspective view illustrating the sensor assembly of FIG. 2;
FIG. 8 is a plan view of a support of FIG. 6;
FIG. 9 is a bottom view of the support of FIG. 6;
FIG. 10 is a plan view of a guide of FIG. 6;
FIG. 11 is a bottom view of the guide of FIG. 6;
FIG. 12 is a flowchart illustrating a method of manufacturing a battery can according to an embodiment of the present disclosure; and
FIG. 13 is a cross-sectional view illustrating a secondary battery according to an embodiment of the present disclosure.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "the same" or "substantially the same." Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

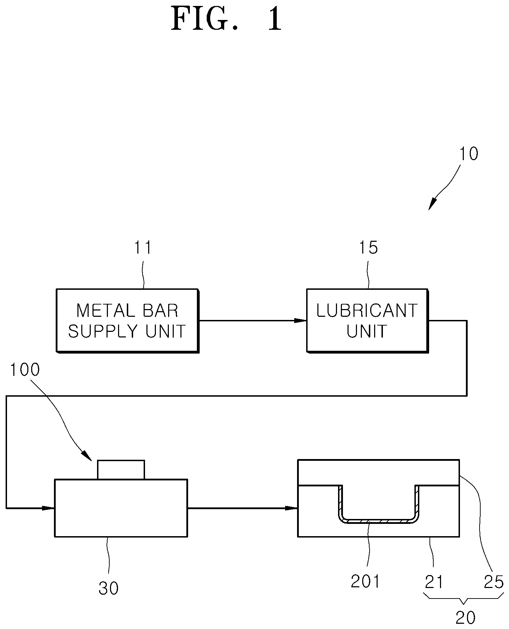

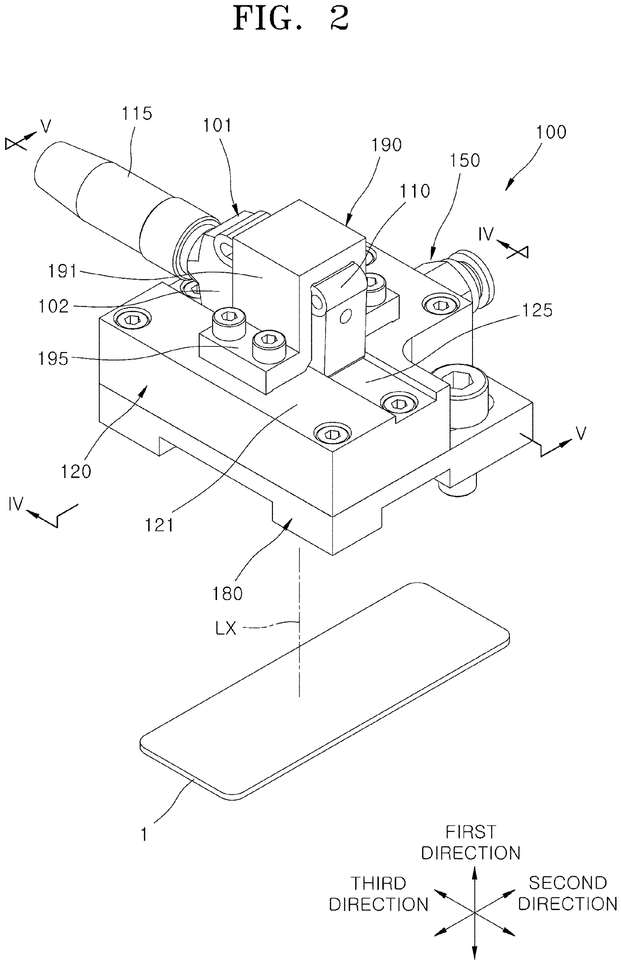

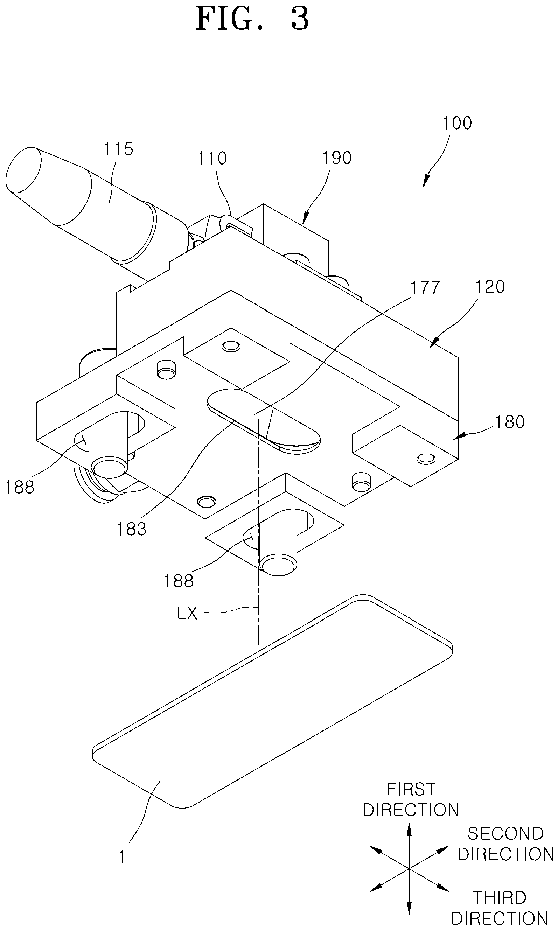

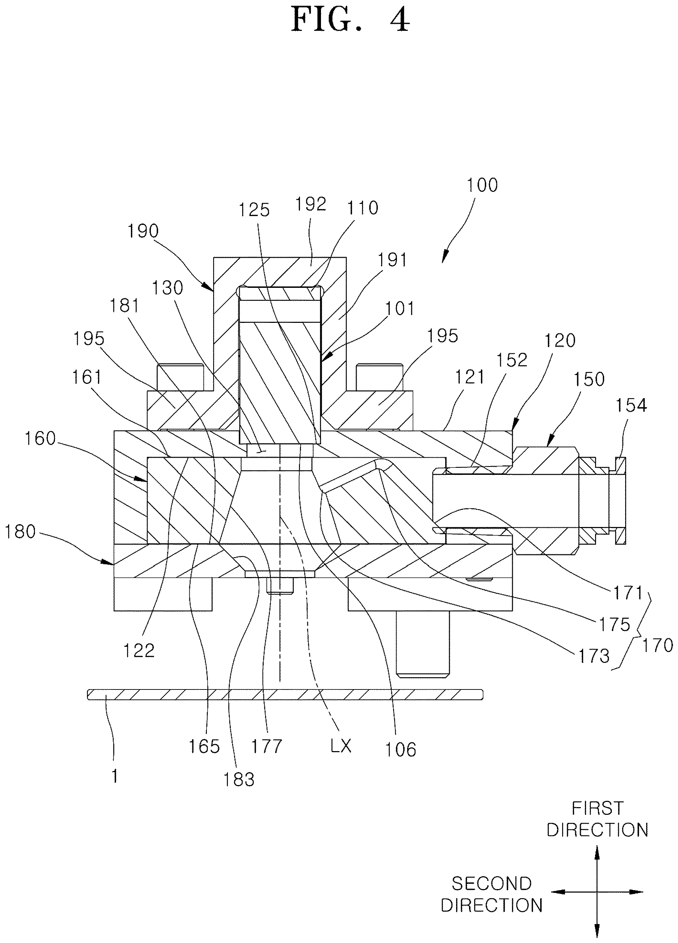

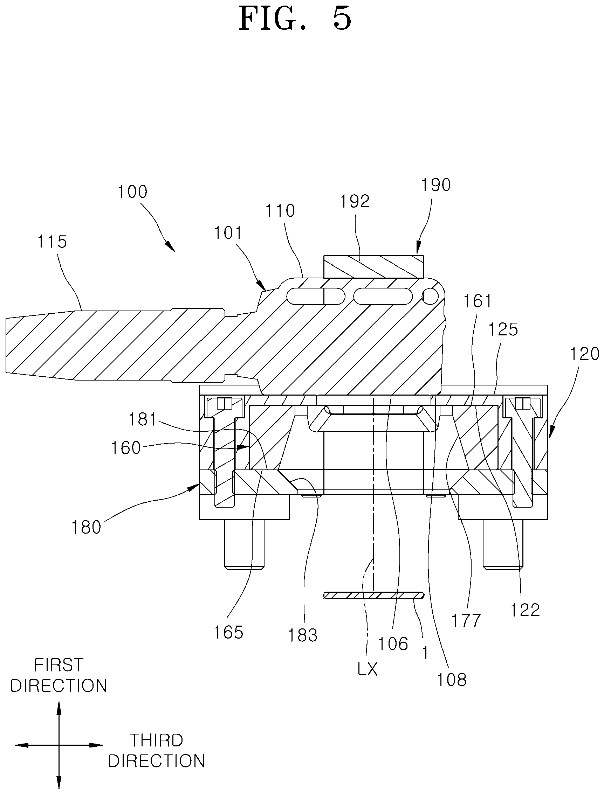

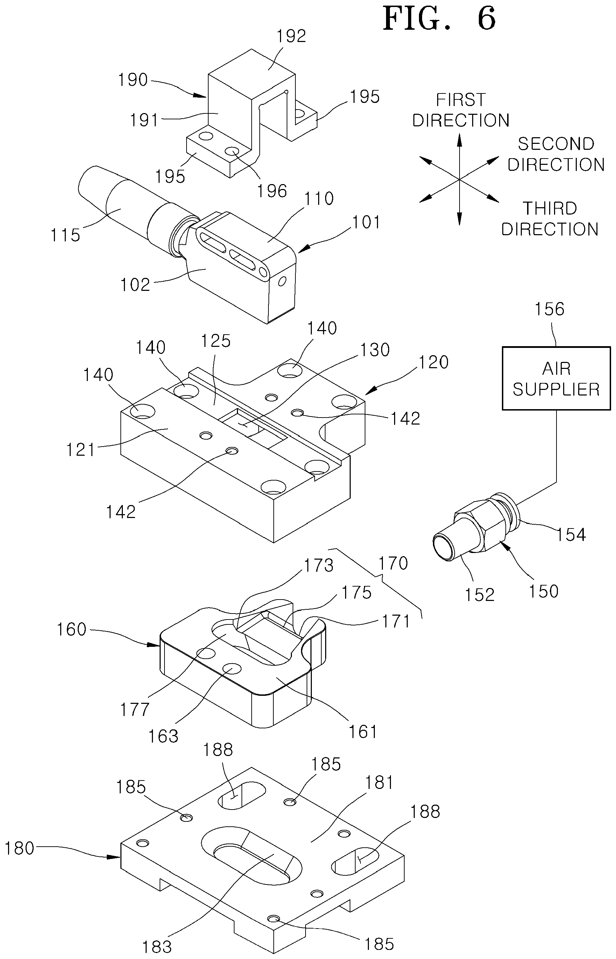

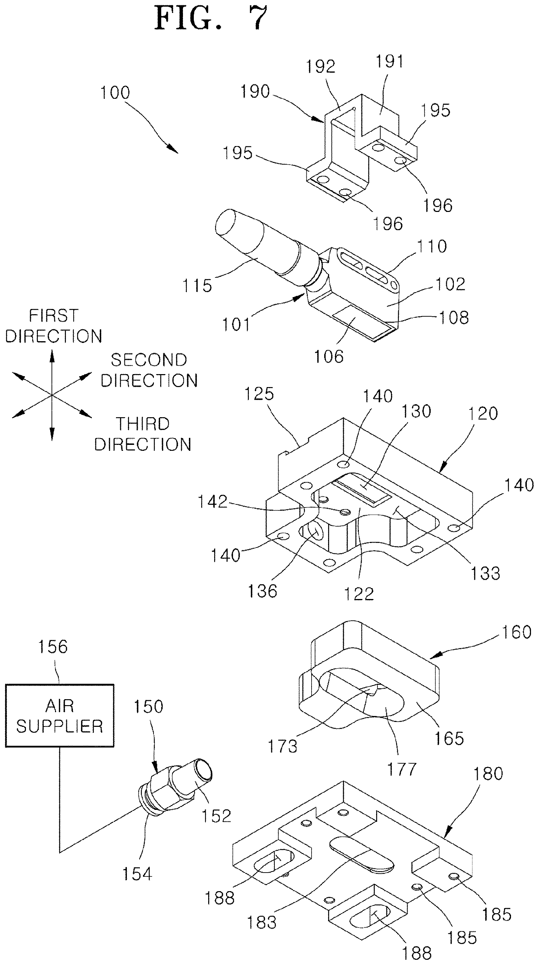

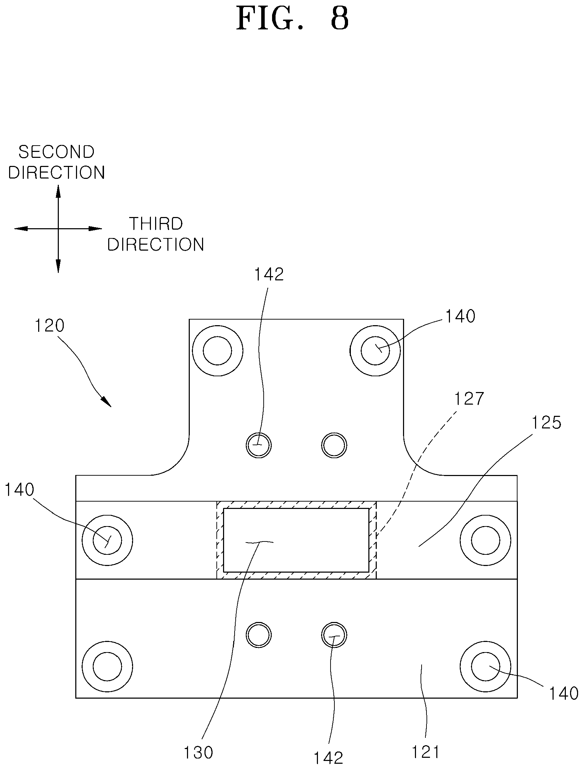

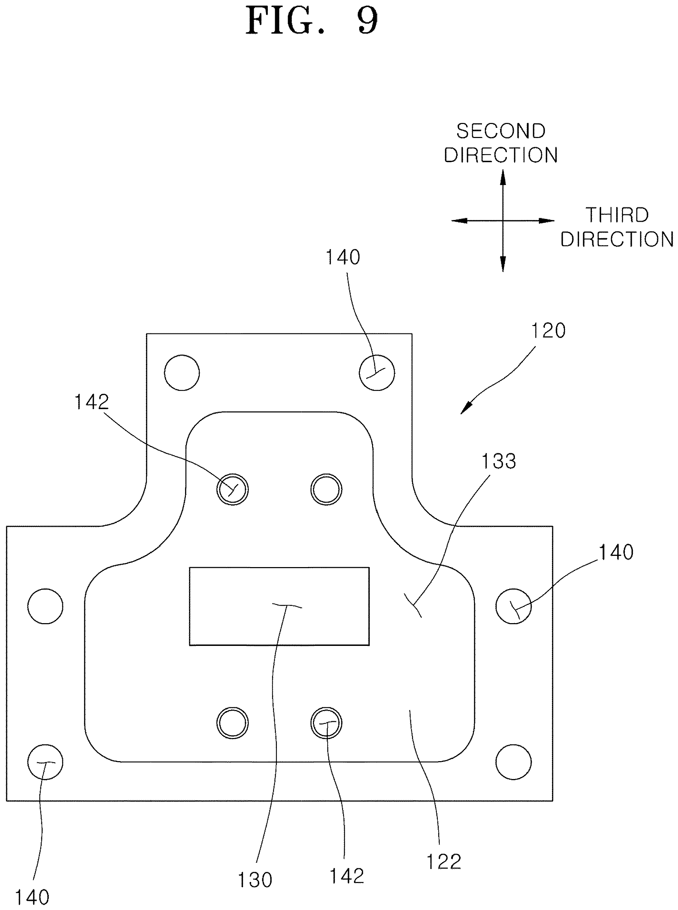

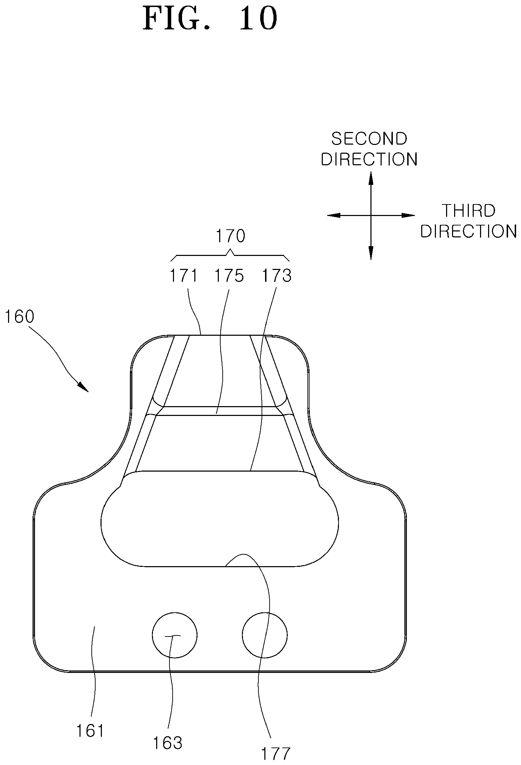

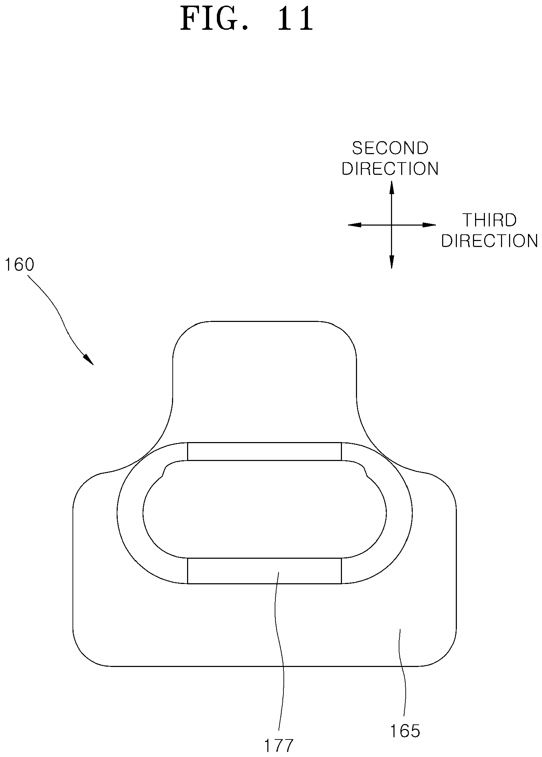

FIG. 1 is a block diagram illustrating a configuration of an apparatus for manufacturing a battery can according to an embodiment of the present disclosure. FIG. 2 is a top perspective view illustrating a sensor assembly of FIG. 1. FIG. 3 is a bottom perspective view illustrating the sensor assembly of FIG. 2. FIG. 4 is a cross-sectional view of the sensor assembly along the line IV-IV of FIG. 2. FIG. 5 is a cross-sectional view of the sensor assembly along the line V-V of FIG. 2. FIG. 6 is a top exploded perspective view illustrating the sensor assembly of FIG. 2. FIG. 7 is a bottom exploded perspective view illustrating the sensor assembly of FIG. 2. FIG. 8 is a plan view of a support of FIG. 6. FIG. 9 is a bottom view of the support of FIG. 6. FIG. 10 is a plan view of a guide in FIG. 6. FIG. 11 is a bottom view of the guide of FIG. 6.

Referring to FIGS. 1 to 3, an apparatus 10 for manufacturing a battery can according to an embodiment of the present disclosure is an apparatus for automatically manufacturing a battery can 201 in which an electrode assembly and an electrolyte of a secondary battery are accommodated and includes a press mold 20 and a sensor assembly 100. For example, the press mold 20 presses a metal bar 1 made of a metal material such as an aluminum alloy and forms the metal bar 1 into the battery can 201.

The press mold 20 may include a lower press mold 21 and an upper press mold 25. In a state in which the metal bar 1 is interposed between the lower press mold 21 and the upper press mold 25, when one of the lower press mold 21 and the upper press mold 25 moves closer to the other and is connected thereto, the metal bar 1 may be formed into the battery can 201 having a concave internal space.

After the battery can 201 is formed, when one of the lower press mold 21 and the upper press mold 25 moves away from the other and is opened, the battery can 201 may be taken out of the press mold 20.

The metal bar 1 passes the sensor assembly 100 before being placed on the press mold 20. For example, the metal bar 1 may pass under the sensor assembly 100 before being placed on the press mold 20. In other words, the metal bar 1 is located in a measuring range of the sensor assembly 100 for a certain period of time. Alternatively to the metal bar 1 passing under the sensor assembly 100, the sensor assembly may be arranged such that the metal bar 1 passes over the sensor assembly 100 or from the side. The sensor assembly 100 counts, e.g. by incrementing a counter, the metal bar 1 placed on the press mold 20.

The apparatus 10 for manufacturing a battery can may further include a metal bar supply unit 11, a lubricant unit 15, and a heating unit 30. The metal bar supply unit 11 may consecutively supply the metal bar 1 at a certain time interval. For example, a series of metal bars 1 may be provided one after another to produce a series of battery cans.

In an embodiment, before the metal bar 1 passes under the sensor assembly 100, the lubricant unit 15 injects a lubricant onto the metal bar 1 and coats a surface of the metal bar 1 with the lubricant. When the surface of the metal bar 1 is not coated with the lubricant, the battery can 201 formed by the press mold 20 may stick to the press mold 20 and may not be taken out smoothly, and the press mold 20 may be damaged.

The heating unit 30 heats the metal bar 1 before the metal bar 1 is placed on the press mold 20. When the metal bar 1 is heated by the heating unit 30, the structure of the metal bar 1 can be softened, and thus a yield of good quality products of the battery can 201 manufactured through press processing can be improved.

For example, the sensor assembly 100 may be coupled to the heating unit 30 to count the metal bar 1 passing through the heating unit 30. However, the present disclosure is not limited to an embodiment in which the sensor assembly 100 is coupled to the heating unit 30.

Referring to FIGS. 2 to 11, the sensor assembly 100 according to an embodiment of the present disclosure includes a sensor 101, a support 120, an air nozzle 150, and an air supplier 156. The sensor 101 detects a detection target 1. The detection target 1 may be the metal bar 1 that is pressed to be the battery can 201. The metal bar 1 may be, for example, a member having a rectangular planar shape with approximately a certain thickness.

The sensor 101 may include a sensor housing 102, a sensing surface 106, and a sensor terminal 115. The detection target 1 may be detected in a non-contact manner through the sensing surface 106. For example, the sensor 101 may be a photosensor. A sensing element and a circuit board on which the sensing element is mounted may be installed inside the sensor housing 102, wherein the sensing element generates an electrical signal for detecting the presence of the detection target 1 when the detection target 1 is positioned to face the sensing surface 106.

In an embodiment, when the sensor 101 is a photosensor, and the sensing element includes a light-emitting unit that projects light to the outside through the sensing surface 106, and a light receiving unit that, when the light projected from the light-emitting unit is reflected by the detection target 1 and is incident on the sensing surface 106, detects the incident light. In an embodiment, the sensing element may include one of the light-emitting unit and the light-receiving unit.

When one of the light-emitting unit and the light-receiving unit is disposed inside the sensor housing 102, the other of the light-emitting unit and the light-receiving unit may be installed outside the sensor housing 102 at a position facing the sensing surface 106. When the detection target 1 passes between the light-emitting unit and the light-receiving unit, light projected from the light-emitting unit is blocked by the detection target 1 and is not incident on the light-receiving unit such that an electrical signal corresponding to the presence of the detection target 1 may be generated.

An optical axis LX of the sensing surface 106 may extend in a direction in which light is projected from the light-emitting unit and may be parallel to an imaginary line orthogonal to the sensing surface 106. The optical axis LX may be parallel to a first direction. In an embodiment, the sensor terminal 105 may be connected to a cable or wire that transmits a detection signal to a control unit that controls the operation of the apparatus for manufacturing a battery can.

The support 120 supports the sensor 101 without blocking the sensing surface 106. In the sensor 101, a light-transmitting window 130 may be formed in the support 120 to be aligned with the sensing surface 106 in the first direction such that light projected from the light-emitting unit may pass under the sensing surface 106. The light-transmitting window 130 may be a through-hole passing through the support 120 in the first direction. A planar area of the light-transmitting window 130 may be greater than or equal to a planar area of the sensing surface 106.

The sensor 101 may be in contact with and supported on an outer surface 121 of the support 120 to be exposed to the outside of the support 120. The support 120 may include a sensor seating surface 125, on which a peripheral portion 108 of the sensing surface 106 is seated, on the outer surface 121. In an embodiment, the sensor seating surface 125 may be a surface that is recessed stepwise from the outer surface 121.

The air nozzle 150 may be coupled to the support 120. The air nozzle 150 blows external air into the support 120 such that a positive pressure is generated inside the support 120. The air supplier 156 is connected to the air nozzle 150 to blow air into the support 120. In an embodiment, the air supplier 156 may include an air pump (not shown) that pressurizes and discharges air.

A first end portion 152 of the air nozzle 150 may be coupled to a side of the support 120 to enable air flow, and a second end portion 154 of the air nozzle 150 may be connected to an end portion of an air flow path connected to the air supplier 156 to allow air to flow. The air flow may entrain particles that could contaminate the sensor 101. Thus, such particles may be prevented from reaching the sensor 101.

For example, a detection target such as the metal bar 1 may move in a second direction orthogonal to the first direction to be spaced apart from the sensor 101. When the detection target 1 moving in the second direction passes through a position facing the sensing surface 106 and intersecting the optical axis LX, the presence of the detection target 1 may be detected by the sensor 101.

For example, the first direction may be referred to as an up-down direction, and the second direction may be referred to as a front-rear direction. A third direction orthogonal to the first and second directions may be referred to as a left-right direction. The detection target 1 may move toward the press mold 20 (see FIG. 1) in the first direction and the front-rear direction below the sensor 101 and the support 120.

The outer surface 121 of the support 120 on which the sensor 101 is supported may be an upper surface. A guide accommodation groove 133 that is open downward may be formed in the support 120 such that an internal space in which a guide 160 is accommodated is formed in the support 120.

The sensor assembly 100 may further include the guide 160, a guide holder 180, and a sensor fixing bracket 190. The guide 160 is installed inside the support 120 and guides the flow of air inside the support 120. The guide 160 may be inserted into the guide accommodation groove 133 of the support 120. The guide accommodation groove 133 may have the form of a recess or a cutout. The guide accommodation groove 133 may have a cross-section which is generally T-shaped. For example, the guide accommodation groove 133 may have a T-shaped appearance when viewed from the first direction.

The guide 160 may include an upper surface 161 and a lower surface 165 that are orthogonal to the first direction and are parallel to each other. When the guide 160 is inserted into the guide accommodation groove 133, the upper surface 161 of the guide 160 may face and be in contact with an inner surface 122 of the support 120 opposite to the outer surface 121 of the support 120.

The guide 160 may include an inflow guide portion 170 and a discharge guide portion 177. The discharge guide portion 177 may be a through-hole passing through the upper surface 161 and the lower surface 165 of the guide 160 in the first direction.

The discharge guide portion 177 may expand obliquely such that a cross-sectional area of a flow path through which air flows increases away from the sensing surface 106. As shown in FIGS. 4 and 5, the cross-sectional area of the flow path of the discharge guide portion 177 may expand downward away from the sensing surface 106 in the first direction or along the optical axis LX.

The inflow guide portion 170 may be connected to the discharge guide portion 177 to allow air to flow such that air flowing into the support 120 from the air nozzle 150 is guided to the discharge guide portion 177. The inflow guide portion 170 may include one end portion 171, e.g. a first end portion 171, the other end portion 173, e.g. a second end portion 173, and flow path portion, ora minimum flow path portion 175.

The first end portion 171 of the inflow guide portion 170 may be open toward the air nozzle 150. The second end portion 173 of the inflow guide portion 170 may be connected to the discharge guide portion 177. The minimum flow path portion 175 may be provided between the first end portion 171 and the second end portion 173. The minimum flow path portion 175 is a portion at which a cross-sectional area of a flow path is narrowest in a flow path of the inflow guide portion 170.

The inflow guide portion 170 may extend in the second direction. As shown in FIGS. 6 and 10, the inflow guide portion 170 may be formed by a groove recessed downward from the upper surface 161 of the guide 160. In an embodiment, the flow path of the inflow guide portion 170 through which air flows may be limited by the groove recessed downward from the upper surface 161 of the guide 160 and the inner surface 122 of the support 120. However, the inflow guide portion 170 shown in FIGS. 6 and 10 is an example, and unlike that shown in FIGS. 6 and 10, the inflow guide portion 170 may be formed by a through-hole extending in the second direction.

A nozzle coupling hole 136 may be formed in the support 120 to pass through a sidewall of the support 120 in the second direction. The first end portion 152 of the air nozzle 150 may be coupled to the nozzle coupling hole 136 to allow air to flow. The first end portion 152 of the air nozzle 150 and the first end portion 171 of the inflow guide portion 170 may be coupled to allow air to flow.

The guide holder 180 may be coupled to the support 120 such that the guide 160 is not separated from the support 120 while accommodated inside the support 120. In an embodiment, the guide holder 180 may be a member having an approximately rectangular planar shape and may be coupled to the support 120 by a plurality of fastening bolts.

A plurality of fastening bolt holes 140 through which the plurality of fastening bolts pass may be formed in the support 120, and a plurality of fastening bolt holes 185, which are aligned with the plurality of fastening bolt holes 140 in the first direction and in which the plurality of fastening bolts are fixed, may be formed in the guide holder 180.

An upper surface 181 of the guide holder 180 faces the lower surface 165 of the guide 160 and supports the guide 160 such that the guide 160 is not separated from the guide accommodation groove 133. In an embodiment, the guide holder 180 may be coupled to the heating unit 30 (see FIG. 1) by a plurality of fastening bolts. A plurality of fastening bolt holes 188 through which the plurality of fastening bolts coupled to the heating unit 30 pass may be formed in the guide holder 180.

The guide holder 180 may include an air discharge portion 183 extending to be aligned with the discharge guide portion 177 in the first direction. The air discharge portion 183 may include a through-hole passing through the guide holder 180 in the first direction. An inner surface of the through-hole of the air discharge portion 183 may be inclined such that a cross-sectional area of the through-hole functioning as an air flow path decreases away from the sensing surface 106.

The detection target 1 may be positioned to be spaced apart from the sensor 101 with the guide 160 interposed therebetween and may be moved in the second direction. For example, the detection target 1 may move in the second direction below the guide 160 and the guide holder 180.

The sensor 101 may detect the presence of the detection target 1 when the detection target 1 is positioned to face the sensing surface 106 with the guide 160 interposed therebetween. For example, the sensor 101 may detect the presence of the detection target 1 when the detection target 1 intersects the optical axis LX as shown in FIGS. 2 to 5.

When the detection target 1 moves in the second direction below the guide holder 180, air supplied from the air supplier 156 may flow into the support 120 through the air nozzle 150 and may move parallel to the optical axis LX and away from the sensing surface 106, that is, in a direction opposite to a direction toward the sensor 101 to be emitted to the outside of the support 120.

Accordingly, for example, pollutants such as lubricant dust and dust may not flow into the support 120 and the guide 160 through the air discharge portion 183, and malfunctions and errors of the sensor 101 due to the pollutants can be prevented, or substantially prevented.

For example, air flowing into the support 120 through the air nozzle 150 may move in the second direction along the inflow guide portion 170 to enter the discharge guide portion 177 and may move away from the sensing surface 106 along the discharge guide portion 177 to be discharged to the outside of the sensor assembly 100 through the air discharge portion 183.

In an embodiment, a cross-sectional area of a flow path may gradually narrow from first end portion 171 of the inflow guide portion 170 to the minimum flow path portion 175, and a cross-sectional area of a flow path may gradually expand from the minimum flow path portion 175 to the second end portion 173 of the inflow guide portion 170. Therefore, according to Bernoulli's theorem, a flow speed of air in the inflow guide portion 170 may gradually increase from the first end portion 171 to the minimum flow path portion 175 and may gradually decrease from the minimum flow path portion 175 to the second end portion 173.

A cross-sectional area of a flow path in the discharge guide portion 177 may expand away from the sensing surface 106. Accordingly, a flow speed of air entering the discharge guide portion 177 from the inflow guide portion 170 may gradually decrease away from the sensing surface 106 according to Bernoulli's theorem.

A cross-sectional area of a flow path in the air discharge portion 183 may decrease in a direction away from the sensing surface 106. Thus, a flow speed of air entering the air discharge portion 183 from the discharge guide portion 177 may gradually increase, and the air may be discharged to the outside of the guide holder 180. Accordingly, an inflow of pollutants into the support 120 and the guide 160 through the air discharge portion 183 may be more reliably blocked, and malfunctions and errors of the sensor 101 due to the pollutants may be more reliably prevented.

In an embodiment, the sensor fixing bracket 190 fixes the sensor 101 to the support 120 such that the peripheral portion 108 of the sensing surface 106 is in close contact with the sensor seating surface 125. The sensor fixing bracket 190 may include a sensor contact portion 191 and a pair of fastener connection portions 195 connected to both ends of the sensor contact portion 191. The sensor contact portion 191 may be around (e.g., surround) the sensor 101 to be in close contact with the sensor 101. In an embodiment, the pair of fastener connection portions 195 may be coupled to the support 120 by a fastener.

For example, the fastener for connecting each fastener connection portion 195 and the support 120 may be a fastening bolt. Fastening bolt holes 196 through which the fastening bolt passes may be formed in each fastener connection portion 195, and a plurality of fastening bolt holes 142, which are aligned with the plurality of fastening bolt holes 196 in the first direction and in which the plurality of fastening bolts are fixed, may be formed in the support 120.

When the pair of fastener connection portions 195 are coupled to the support 120 by the plurality of fastening bolts, a middle portion 192 of the sensor contact portion 191 may press the sensor 101 toward the sensor seating surface 125. Accordingly, the peripheral portion 108 of the sensing surface 106 may be in close contact with a sealing surface 127 around the light-transmitting window 130 at the sensor seating surface 125.

Therefore, air flowing into the support 120 through the air nozzle 150 may not leak to the outside of the support 120 through the light-transmitting window 130, and a magnitude of a positive pressure inside the support 120 may increase such that an inflow of pollutants into the support 120 can be more reliably blocked.

In an embodiment, the sensor 101 may further include an elastic deformation portion 110 positioned between the sensor housing 102 and the middle portion 192 of the sensor contact portion 191 and coupled to the sensor housing 102. When the sensor 101 is wrapped with, or enclosed by, the sensor fixing bracket 190 and the pair of fastener connection portions 195 are fixed to the support 120 with fasteners, as the elastic deformation portion 110 is elastically deformed by the middle portion 192 of the sensor contact portion 191, the peripheral portion 108 of the sensing surface 106 may be in close contact with the sealing surface 127 around the light-transmitting window 130 with stronger, or higher, pressure. In other words, when the sensor fixing bracket 190 is fixed to the support 120, the elastic deformation portion 110 may be pressed to the sealing surface 127. Thus, an airtight seal may be generated to allow for controlling of the air flow. Therefore, air flowing into the support 120 through the air nozzle 150 may not leak to the outside of the support 120 through the light-transmitting window 130, and a magnitude of a positive pressure inside the support 120 may increase such that an inflow of pollutants into the support 120 can be more reliably blocked.

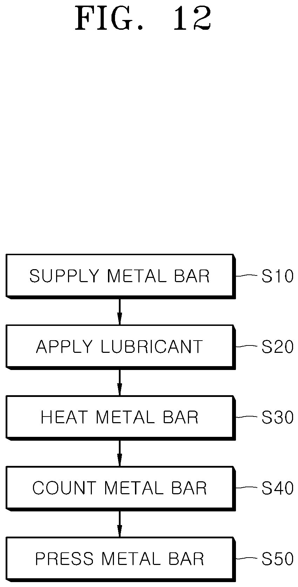

FIG. 12 is a flowchart illustrating a method of manufacturing a battery can according to an embodiment of the present disclosure. Referring to FIGS. 1 and 12, the method of manufacturing a battery can according to an embodiment of the present disclosure includes a metal bar supplying task or step S10, a metal bar counting task or step S40, and a metal bar pressing task or step S50.

The method of manufacturing a battery can according to an embodiment of the present disclosure may be performed using the apparatus 10 for manufacturing a battery can according to an embodiment of the present disclosure described with reference to FIG. 1.

The metal bar supplying task or step S10 is a task or step of supplying the metal bar 1. The metal bar supplying task or step S10 may be performed by the metal bar supply unit 11 shown in FIG. 1.

The metal bar counting step S40 is a step of counting the metal bar 1 using the sensor assembly 100. The metal bar counting step S40 may be performed by the sensor assembly 100. Since the sensor assembly 100 has been described in detail with reference to FIGS. 2 to 11, redundant description will be omitted.

The metal bar pressing task or step S50 is a task or step of pressing the metal bar 1 using the press mold 20 and forming the metal bar 1 into the battery can 201. The metal bar pressing task or step S50 may be performed using the press mold 20.

The method of manufacturing a battery can according to an embodiment of the present disclosure may optionally further include a lubricant coating or applying task or step S20 and/or a metal bar heating task or step S30. In an embodiment, the lubricant coating or applying task or step S20 is a step of coating a surface of the metal bar 1 with a lubricant. The lubricant coating or applying task or step S20 may be performed by the lubricant unit 15. The metal bar heating task or step S30 may be performed by the heating unit 30.

The metal bar heating task or step S30 is a task or step of, before the metal bar pressing step S50, heating the metal bar 1 coated with the lubricant to soften a structure of the metal bar 1.

In FIG. 12, the metal bar counting task or step S40 is shown as being performed after the metal bar heating task or step S30, but this is merely an example. The metal bar counting task or step S40 may be performed between the metal bar supplying task or step S10 and the lubricant coating or applying task or step step S20 or between the lubricant applying or coating task or step S20 and the metal bar heating task or step S30.

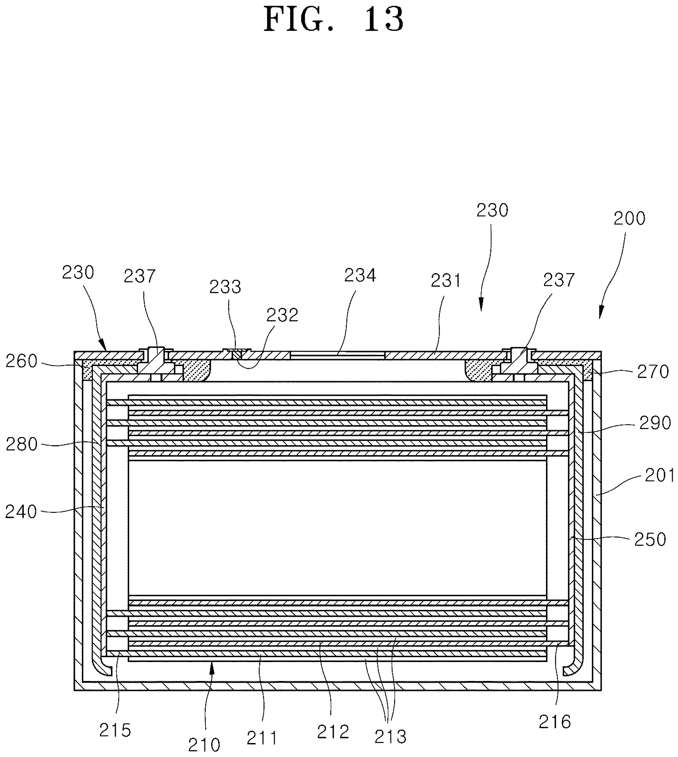

FIG. 13 is a cross-sectional view illustrating a secondary battery according to an embodiment of the present disclosure. Referring to FIG. 13, a secondary battery 200 according to an embodiment of the present disclosure may include at least one electrode assembly 210 formed by interposing a separator 213, which is an insulator, between a positive electrode 211 and a negative electrode 212, and by winding the positive electrode 211, the separator 213, and the negative electrode 212, a battery can 201 in which the electrode assembly 210 is embedded, and a cap assembly 230 coupled to an opening of the battery can 201.

Herein, an example in which the secondary battery 200 is a lithium ion secondary battery having a prismatic shape will be described. However, the present disclosure is not limited thereto, and the secondary battery 200 may be a lithium polymer battery or a cylindrical battery, for example.

The positive electrode 211 and the negative electrode 212 may include coated portions which are areas in which an active material is applied on a current collector made of a thin metal foil, and uncoated portions 215 and 216 which are areas which are not coated with an active material.

In an embodiment, the positive electrode 211 and the negative electrode 212 may be wound after the separator 213 which is the insulator is interposed therebetween. However, the present disclosure is not limited thereto, and, in an embodiment, the electrode assembly 210 may have a structure in which a positive electrode and a negative electrode, each including a plurality of sheets, are alternately stacked with a separator interposed therebetween.

The battery can 201 may form an overall exterior of the secondary battery 200 and may be made of a conductive metal such as aluminum, an aluminum alloy, or nickel-plated steel. The battery can 201 may provide a space in which the electrode assembly 210 is accommodated. The battery can 201 may be manufactured through the method of manufacturing a battery can according to the present disclosure described with reference to FIG. 12. Since the method of manufacturing a battery can according to the present disclosure has been described above, redundant description thereof will be omitted.

The cap assembly 230 may include a cap plate 231 that covers the opening of the battery can 201, and the battery can 201 and the cap plate 231 may be made of a conductive material. A terminal 237 electrically connected to the positive electrode 211 or the negative electrode 212 may be installed to pass through the cap plate 231 and protrude to an outside of the cap plate 231.

In an embodiment, the terminal 237 protruding to the outside of the cap plate 231 may be provided as a pair of terminals 237. Each of the pair of terminals 237 may be connected to one of the positive electrode 211 and the negative electrode 212 and may function as one of a positive electrode terminal and a negative electrode terminal of the secondary battery 200. In an embodiment, the terminals 237 may be electrically connected to current collectors including first and second current collectors 240 and 250 (herein referred to as positive and negative current collectors) respectively joined to a positive electrode uncoated portion 215 and a negative electrode uncoated portion 216 through welding, for example. For example, the pair of terminals 237 may each be connected to one of the positive and negative current collectors 240 and 250 through welding. However, the present disclosure is not limited thereto, and the terminals 237 and the positive and negative current collectors 240 and 250 may be formed by being integrally coupled, for example. In an embodiment, an outer peripheral surface of an upper pillar of the terminal 237 may be threaded and may be fixed to the cap plate 231 through a nut.

However, the present disclosure is not limited thereto, and, in an embodiment, the terminal 237 may have a rivet structure to be riveted or may be welded and coupled to the cap plate 231.

The cap plate 231 may be made of a thin plate and may be coupled to the opening of the battery can 201. An electrolyte injection port 232 on which a sealing stopper 233 may be installed may be formed in the cap plate 231, and a vent 234 may be installed or arranged in the cap plate 231.

The vent 234 may be opened or closed in response to a change in internal pressure of the battery can 201. That is, the vent 234 may maintain a closed state to seal the battery can 201 during normal operation of the electrode assembly 210. The vent 234 may be opened as the internal pressure of the battery can 201 rises to a certain amount (e.g., a set magnitude) or greater due to overcharging or an outbreak of fire, for example, and may discharge emissions such as flames and gases to the outside from the inside of the battery can 201.

In an embodiment, an insulating member may be installed between the electrode assembly 210 and the cap plate 231. In an embodiment, the insulating member may include first and second lower insulating members 260 and 270, and each of the first and second lower insulating members 260 and 270 may be installed between the electrode assembly 210 and the cap plate 231.

In an embodiment, an end portion of a separation member that may be installed to face a side surface of the electrode assembly 210 may be installed between the insulating member and the terminal 237.

In an embodiment, the separation member may include first and second separation members 280 and 290.

Accordingly, end portions of the first and second separation members 280 and 290 that may be installed to face a side surface of the electrode assembly 210 may be installed between the first and second lower insulating members 260 and 270 and the positive and negative electrode terminals 237.

In an embodiment, the terminals 237 welded and coupled to the positive and negative current collectors 240 and 250, respectively, may be connected to end portions of the first and second lower insulating members 260 and 270 and the first and second separating members 280 and 290, respectively.

According to one or more embodiments of the present disclosure, a positive pressure is generated in an internal space of a support such that a sensing surface of a sensor is not contaminated with pollutants such as lubricant dust. Therefore, malfunctions and errors of the sensor may be prevented.

According to one or more embodiments of the present disclosure, malfunctions and errors of a sensor assembly may be prevented, and thus an operation stop of an apparatus for manufacturing a battery can due to errors of a sensor assembly may be prevented. Accordingly, the productivity of the battery can and a secondary battery including the battery can may be improved, especially by improving the productivity of the apparatus for manufacturing the battery can.

The present disclosure has been described with regard some example embodiments and drawings, but the present disclosure is not limited thereto and it will be understood by those skilled in the art that various modifications and changes may be made thereto within the scope of the claims.

## Claims

1. An apparatus for manufacturing a battery can (201), the apparatus comprising:
a press mold (20) configured to press a metal bar (1) made of a metal material and form the metal bar (1) into a battery can (201); and
a sensor assembly (100) configured to count the metal bar (1),
wherein the sensor assembly (100) comprises a sensor (101) including a sensing surface (106) to detect the metal bar (1) before the metal (1) bar is placed on the press mold (20), a support (120) configured to support the sensor (101) without blocking the sensing surface (106), an air nozzle (150) coupled to the support (120) and configured to blow air outside the support (120) into the support (120) such that a positive pressure is generated inside the support (120), and an air supplier (156) connected to the air nozzle (150) to blow the air into the support (120).

2. The apparatus for manufacturing a battery can (201) as claimed in claim 1, wherein the air flowing into the support (120) is moved in a direction opposite to a direction toward the sensor (101) and is discharged to an outside of the support (120).

3. The apparatus for manufacturing a battery can (201) as claimed in claim 1 or claim 2, wherein the sensor assembly (100) further comprises a guide (160) arranged inside the support (120) and configured to guide the air to flow inside the support (120).

4. The apparatus for manufacturing a battery can (201) as claimed in claim 3, wherein the guide (160) comprises a discharge guide portion (177) that obliquely expands such that a cross-sectional area of a flow path increases away from the sensing surface (106).

5. The apparatus for manufacturing a battery can (201) as claimed in claim 4, wherein the guide (160) further comprises an inflow guide portion (170) connected to the discharge guide portion (177) to allow air to flow such that the air flowing into the support (120) from the air nozzle is guided to the discharge guide portion (177).

6. The apparatus for manufacturing a battery can (201) as claimed in claim 5, wherein the inflow guide portion (170) comprises a first end portion (171) that is open toward the air nozzle (150), a second end portion (173) connected to the discharge guide portion (177), and a flow path portion (175) in which a cross-sectional area of a flow path is narrowest between the first end portion (171) and the second end portion (173).

7. The apparatus for manufacturing a battery can (201) as claimed in one of claims 3 through 6, wherein the sensor assembly (100) further comprises a guide holder (180) coupled to the support (120) such that the guide (160) is not separated from the support (120) while accommodated inside the support (120).

8. The apparatus for manufacturing a battery can (201) as claimed in claim 7, wherein the guide holder (180) comprises an air discharge portion (183) which is aligned with the discharge guide portion (177) and connected to allow air to flow and in which a cross-sectional area of a flow path decreases away from the sensing surface (106).

9. The apparatus for manufacturing a battery can (201) as claimed in one of the aforementioned claims, wherein the sensor (101) is a photosensor, and
the air flowing into the support (120) is moved parallel to an optical axis of the sensing surface (106) and is discharged to the outside of the support (120).

10. The apparatus for manufacturing a battery can (201) as claimed in one of the aforementioned claims, wherein a light-transmitting window (130) aligned with the sensing surface (106) is formed in the support (120) such that light is incident on the sensing surface (106).

11. The apparatus for manufacturing a battery can (201) as claimed in one of the aforementioned claims, wherein the sensor (101) is in contact with and supported on an outer surface of the support (120), and
the support (120) comprises a sensor seating surface (125), on which a peripheral portion of the sensing surface (106) is seated, on the outer surface.

12. The apparatus for manufacturing a battery can (201) as claimed in claim 11, wherein the sensor assembly (100) further comprises a sensor fixing bracket (190) configured to fix the sensor (101) to the support (120) such that the peripheral portion of the sensing surface (106) is in close contact with the sensor seating surface (125).

13. The apparatus for manufacturing a battery can (201) as claimed in claim 12, wherein the sensor fixing bracket (190) includes a sensor contact portion (191) around the sensor (101) and in close contact with the sensor (101), and a fastener connection portion (195) connected to an end of the sensor contact portion (191) and coupled to the support by a fastener, and
the sensor contact portion (191) presses the sensor (101) toward the sensor seating surface (125).

14. A method of manufacturing a battery can (201), the method comprising:
supplying a metal bar (1);
counting the metal bar (1) using a sensor assembly (100); and
pressing the metal bar (1) using a press mold (20) and forming the metal bar (1) into a battery can (201),
wherein the sensor assembly (100) comprises a sensor (101) including a sensing surface (106) to detect the metal bar (1) before the pressing the metal bar, a support (120) configured to support the sensor (101) without blocking the sensing surface (106), an air nozzle (150) coupled to the support (120) and configured to blow air outside the support (120) into the support (120) such that a positive pressure is generated inside the support (120), and an air supplier (156) connected to the air nozzle (150) to blow the air into the support (120).

15. A secondary battery (200) comprising:
a battery can (201) manufactured through the method as claimed in 14;
an electrode assembly (210) accommodated in the battery can (201); and
a cap assembly (230) configured to cover an opening of the battery can (201) and coupled to the battery can (201).
